# EUROPEAN PATENT APPLICATION

(11) **EP 0 884 494 A1**
(43) Date of publication of application: **16.12.1998**
(21) Application number: 98110036.5
(22) Date of filing: 02.06.1998
(51) Int. Cl.: F16D 41/10, B60R 1/06, B60Q 1/24

(54) **Locking mechanism**

(30) Priority: 02.06.1997 JP 144096/97; 02.06.1997 JP 144097/97; 14.10.1997 JP 280068/97; 14.10.1997 JP 280069/97; 14.10.1997 JP 280070/97
(71) Applicant: ICHIKOH INDUSTRIES LIMITED, Shinagawa-ku Tokyo 141 (JP)
(72) Inventor: Dobashi, Masayuki, c/o Ichikoh Industries, Ltd., Isehara-shi, Kanagawa (JP); Matsui, Kazunari, c/o Ichikoh Industries, Ltd., Isehara-shi, Kanagawa (JP)
(74) Representative: Grünecker, Kinkeldey, Stockmair & Schwanhäusser Anwaltssozietät

(57) **Abstract**

A locking mechanism comprises an outer race (21) encircling an inner race (30), one of which is rotatable, the other non-rotatable, there being two sets of jamming members (e.g. rollers - 49,50) in oppositely facing tapered spaces between the races (21,30), biased (e.g. by springs - 47,48) to prevent rotation of the one race; arms (42) of a releasing member (40) extending between the jamming members (49,50) so that when the releasing member (40) is rotated, the arms (42) release one of the sets of jamming members (49,50) to rotate the one race (21,30) with the releasing member (40).

## Description

### BACKGROUND OF THE INVENTION

### 1. Field of the Invention

This invention relates to a locking mechanism that is used, for example, in vehicular electric housed type mirrors.

### 2. Description of the Related Art

Electric housed type mirrors which are attached to vehicles have been proposed in recent years. Such an electric housed type mirror can be rotated to its housing position so that it is not a hindrance, when the vehicle is parked. Also, when the vehicle travels, the mirror can be rotated from the housing position to the operating position.

This mirror is rotated by a motor, and needs to be firmly locked at the operating position so that it is not moved by the vibration of the vehicle during operation. Also, it is preferable that the mirror can be rotated with small driving force when it is housed.

For this reason, a locking mechanism making use of an electromagnetic clutch is considered. However, wiring for an electromagnetic clutch is needed, and furthermore, the structure for driving the electromagnetic clutch and motor becomes complicated, so that the locking mechanism becomes expensive. Moreover, there is a problem that in the case where locking force for the mirror is made great, the main body of the clutch will be increased in size.

Also, in the case where a friction clutch taking advantage of frictional surface force is used, if great locking force is attempted to be obtained with a reduced size, great thrust load will be required. Furthermore, in order to release the frictional force and cause the mirror to be in a free state, the clutch plate has to be moved against the thrust load and therefore great reaction force becomes necessary, so that there is a problem that the clutch section will be increased in size.

### SUMMARY OF THE INVENTION

An object of the present invention is to provide a locking mechanism which is capable of locking the driven member with great locking force and also moving the driven member with small driving force without using an electromagnetic clutch or the like and with simple structure.

To achieve this end and in accordance with one important aspect of the present invention, there is provided a locking mechanism comprising: a cylindrical outer race; an inner race provided within the outer race so that it is rotatable relatively against the outer race; a release member arranged in clearance between the outer race and the inner race and also rotatable on a center axis line of the outer race; and bite means arranged in the clearance and also bit in the clearance; wherein the release member releases the bite of the bite means into the clearance and enables the inner race to rotate relatively against the outer race, when rotated relatively against the outer race; and wherein the bite means bites into the clearance, then prevents the relative rotation of the inner race, and locks the inner race with great locking force, when only the inner race is rotated relatively against the outer race.

In accordance with another important aspect of the present invention, there is provided a locking mechanism comprising: a stationary shaft protruded from a stationary base; a gear member attached to the stationary shaft so that it is freely rotatable, a point end portion of the stationary shaft being protruded from one side surface of the gear member; a release member provided on the one side surface of the gear member; an outer race to which a driven member is attached, the outer race being inserted on the point end portion of the stationary shaft so that it is freely rotatable and also having a circumferential wall which surrounds the release member; a motor for rotating the gear member; and bite means arranged in clearance formed between the circumferential wall and an outer circumferential surface of the point end portion of the stationary shaft; wherein the bite means bites into the clearance and locks the outer race, when the outer race is rotated relatively against the gear member; and when the gear member is rotated by the motor, the release means releases the bite of the bite means into the clearance and also rotates the outer race, whereby the driven member is moved with small driving force and the outer race is locked at a stopped position with great locking force when the motor is stopped.

### BRIEF DESCRIPTION OF THE DRAWINGS

The present invention will be described in further detail with reference to the accompanying drawings in which:
FIG. 1 is a front view showing a vehicular electric housed type mirror applying a locking mechanism of this invention;
FIG. 2 is a perspective view showing the constitution of the vehicular electric housed type mirror of FIG. 1;
FIG. 3 is a side view showing the constitution of the locking mechanism of FIG. 2;
FIG. 4 is a sectional view showing the constitution of the locking mechanism;
FIG. 5 is an exploded perspective view showing the constitution of the locking mechanism;
FIG. 6 is a horizontal view showing the constitution of the locking mechanism;
FIG. 7 is a block diagram showing the constitution of the control system of the locking mechanism;
FIG. 8 is an explanatory diagram showing the state in which the bite of the roller has been released and the direction in which the inner race of the locking mechanism is rotated;
FIG. 9 is an exploded perspective view showing the constitution of a locking mechanism of a fourth embodiment;
FIG. 10 is a plan view showing the constitution of the locking mechanism of the fourth embodiment;
FIG. 11 is an exploded perspective view showing the constitution of a locking mechanism of a fifth embodiment;
FIG. 12 is a plan view showing the constitution of the locking mechanism of the fifth embodiment;
FIG. 13 is an exploded perspective view showing the constitution of a locking mechanism of a sixth embodiment;
FIG. 14 is a plan view showing the constitution of the locking mechanism of the sixth embodiment;
FIG. 15 is a partly enlarged view of FIG. 14;
FIG. 16 is an exploded perspective view showing the constitution of a locking mechanism of a seventh embodiment;
FIG. 17 is a plan view showing the constitution of the locking mechanism of the seventh embodiment;
FIG. 18 is a plan view showing the constitution of the locking mechanism of an eighth embodiment;
FIG. 19 is an explanatory diagram showing the state in which the lever portion of the locking mechanism has been rotated with the locking mechanism of FIG. 18;
FIG. 20 is a perspective view showing a vehicular electric housed type mirror applying a locking mechanism of a ninth embodiment;
FIG. 21 is a side view showing the locking mechanism of FIG. 20;
FIG. 22 is an exploded perspective view showing the constitution of the locking mechanism;
FIG. 23 is a horizontal sectional view showing the constitution of the locking mechanism;
FIG. 24 is an explanatory diagram showing the state in which the bite of the roller has been released;
FIG. 25 is an explanatory diagram showing the state in which the rollers has bitten;
FIG. 26 is a perspective view showing a vehicular electric housed type mirror applying a locking mechanism of a first embodiment;
FIG. 27 is an exploded perspective view showing the constitution of the vehicular electric housed type mirror of FIG. 26;
FIG. 28 is an explanatory diagram showing the locking mechanism of FIG. 26;
FIG. 29 is a vertical sectional view of FIG. 28;
FIG. 30 is a horizontal sectional view showing the constitution of the locking mechanism;
FIG. 31 is an enlarged explanatory diagram showing the locked state of the inner race of the locking mechanism;
FIG. 32 is an enlarged explanatory diagram showing the released state of the inner race of the locking mechanism;
PIG. 33 is an exploded perspective view showing a vehicular electric housed type mirror applying a locking mechanism of a second embodiment; and
FIG. 34 is a horizontal sectional view showing the constitution of the locking mechanism of the second embodiment.

### DETAILED DESCRIPTION OF THE PREFERRED EMBODIMENTS

Preferred embodiments of a vehicular electric housed type mirror provided with a locking mechanism according to the present invention will hereinafter be described based on the drawings.

### (First Embodiment)

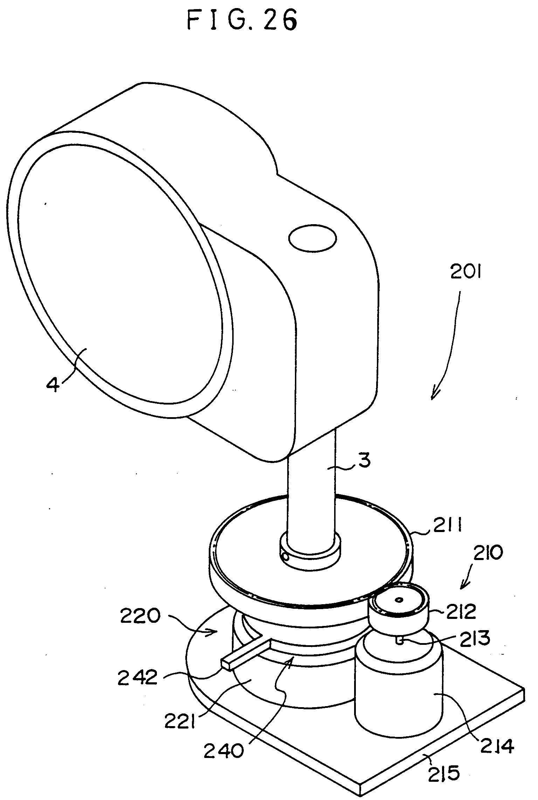

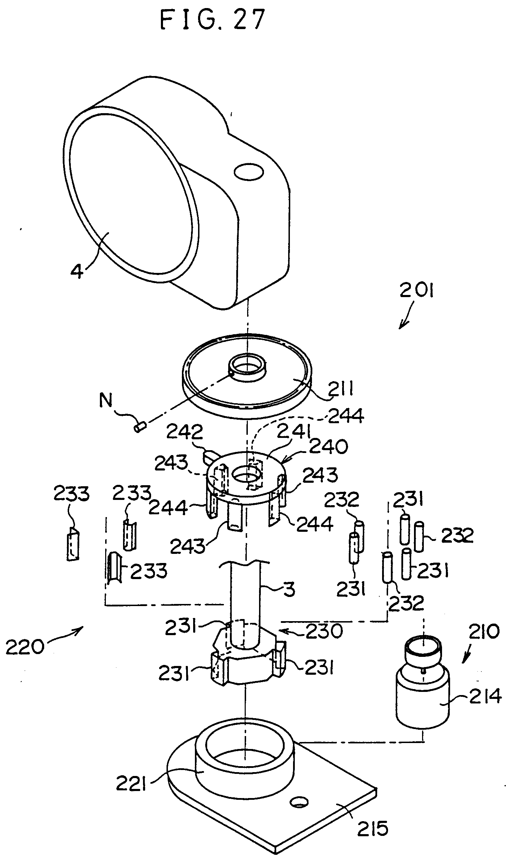

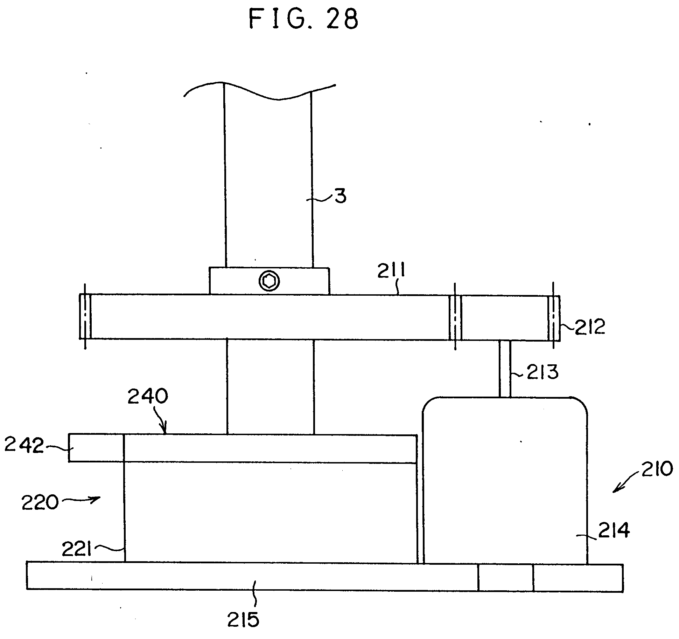

Figs. 26 through 28 show an electric housed type mirror 201 according to a first embodiment of the present invention. This electric housed type mirror 201 is constituted by a mirror 4 (a driven member) attached to a rotatable shaft 3, a drive mechanism 201 for rotating this mirror 4, and a locking mechanism 220.

The drive mechanism 210 is provided with a driven gear 211 fixed by a screw N to the rotatable shaft 3, a driving gear 212 meshing with this driven gear 211, and a motor 214 with a driving shaft 213 to which the driving gear 212 is attached. The drive mechanism 210 rotates the rotatable shaft 3 through the driving gear 212 and driven gear 211 by driving the drive motor 214, and causes the mirror 4 to be rotated to a desired position. The motor 214 rotates positively or reversely by controlling a control switch (not shown). The control switch is installed in a case which covers the drive mechanism 210.

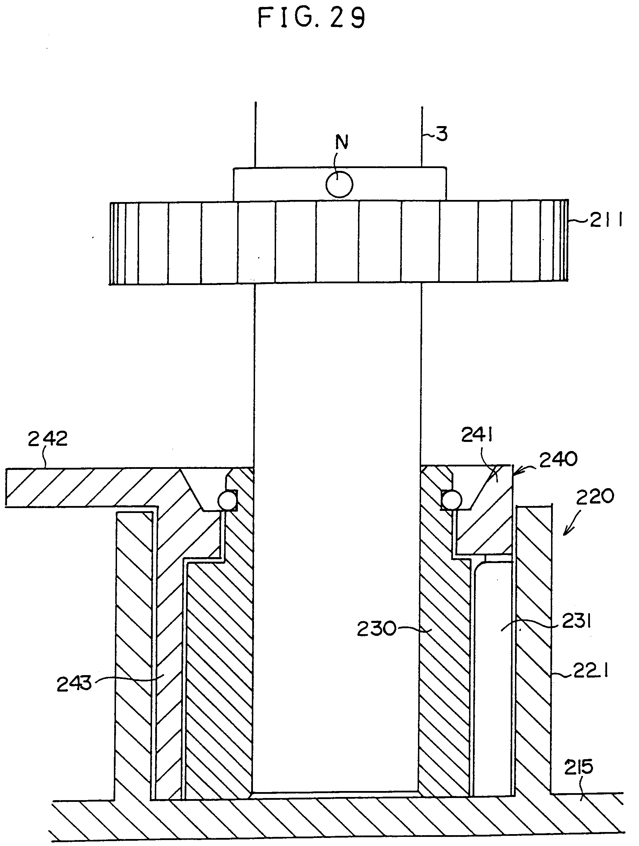

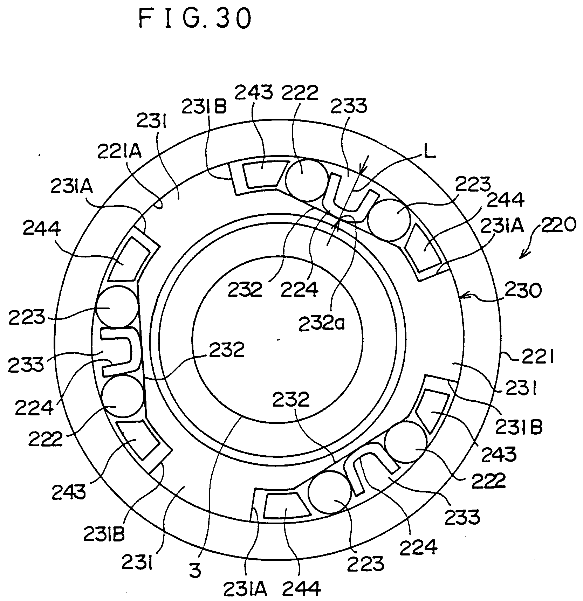

The locking mechanism 220, as shown in Figs. 29 and 30, is provided with a cylindrical outer race 221 formed integrally with a base member 215 attached to a car body, a cylindrical inner race 230 smaller in outside diameter than the inside diameter of the outer race 221 and arranged so as to be freely rotatable within the outer race 221, three sets of cylindrical rollers 222 and 223, three plate springs 224, and a release lever 240.

The inner race 224 is rigidly attached to the rotatable shaft 3, and on the outer circumference of this inner race 230, three guide portions 231 are formed at regular intervals in the circumferential direction. The guide portions 231 abut on the inner circumferential surface 221A of the outer race 221 and rotate the inner race 230 smoothly. On both circumferential ends of this guide portion 231, stop surfaces 231A and 231B are formed in the direction parallel to the radial direction.

Also, on the outer circumference of the inner race 230 a flat surface 232 is formed between adjacent guide portions 231, and the flat surface 232 is perpendicular to the radial direction and extends in the axial direction. Between each flat surface 232 of the inner race 230 and the inner circumferential surface 221 of the outer race 221, clearance 233 is formed. In each clearance 233 a pair of rollers 222 and 223 are arranged. Between the rollers 222 and 223 and at the center position 232a of the flat surface 232, the generally U-shaped plate spring 224 is arranged to urge the rollers 222 and 223 in the right and left directions (in which they are separated from each other).

The radial separation distance L of the clearance 233 is reduced as it goes away from the center position 232a of the flat plate 232. The rollers 222 and 223 bite into the circumferentially reduced clearance 233 by means of the urging force of the plate spring (elastic member) 224. The clearance in which the roller 222 is arranged is referred to as first clearance, and the clearance in which the roller 223 is arranged is referred to as second clearance. The urging force of the plate spring 224 is applied solely for the purpose of urging the rollers 222 and 223 in the direction in which they bite into the clearance 233, so it is set to a small value. Also, since the plate spring 224 is interposed between the rollers 222 and 223 and urges the roller 222 and 223 outward, they can be urged with the same force. Furthermore, since two rollers 222 and 223 are urged with a single plate spring 224, the number of components is reduced.

If turning force is exerted on the inner race 230 in a counterclockwise direction, the roller (bite means or first bite member) 222 will bite into the clearance 233 and therefore the inner race 230 will be locked. At this state, the bite of the roller (bite means or second bite member) 223 into the clearance 233 is released. In the case where turning force is exerted on the inner race 230 in a clockwise direction, the roller (bite means or second bite member) 223 bites into the clearance 233 and therefore the inner race 230 is locked. At this state, the bite of the roller 222 into the clearance 233 is released.

The release lever 240 has a ring portion 241 into which the rotatable shaft 3 is inserted. This ring portion 241 is formed with an arm 242 extending in a horizontal direction and three pairs of levers (release members) 243 and 244 extending downward. The levers 243 and 244 are inserted in the corresponding clearance 233 so that the rollers 222 and 223 are sandwiched in therebetween. The release lever 240 is rotatable against the inner race 230 and rotates on the center axis line of the outer race 221.

If the arm 242 is operated and then the release lever 240 is rotated in a clockwise direction against the inner race 230, the lever 244 will cause the roller 222 to move in the right direction against the urging force of the plate spring 224 and therefore the bite of the roller 222 into the clearance 233 will be released. As a consequence, the rotation of the inner race 230 in the right direction (clockwise direction) will be possible.

Conversely, if the release lever 240 is rotated in a counterclockwise direction against the inner race 230, the lever 244 will cause the roller 223 to move in the counterclockwise direction against the urging force of the plate spring 224 and therefore the bite of the roller 223 into the clearance 233 will be released. As a consequence, the rotation of the inner race 230 in the counterclockwise direction will be possible.

Now, the operation of the vehicular electric housed type mirror of the aforementioned embodiment will be described.

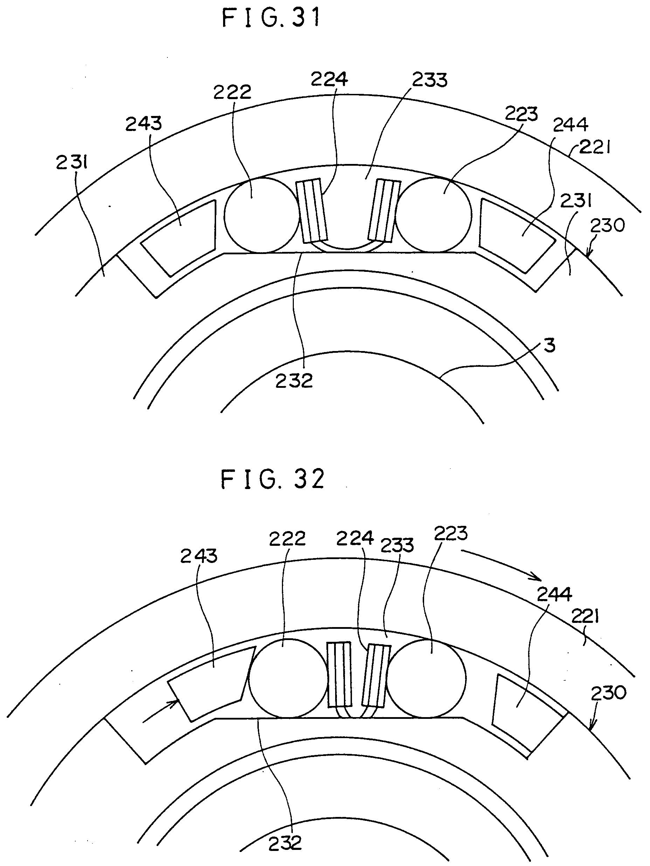

For instance, assume that when the mirror 4 is at the position shown in Fig. 26, the rollers 222 and 223 are at the positions shown in Figs. 30 and 31. From this state the arm 242 is operated so that the release lever 240 is rotated in the clockwise direction against the inner race 230. By this clockwise rotation, as shown in Fig 32, the lever 243 of the release lever 240 moves the roller 222 in the clockwise direction against the urging force of the plate spring 224, so that the bite of the roller 222 into the clearance 233 (first clearance) is released and the clockwise rotation of the inner race 230 becomes possible.

This bite release is performed by moving the roller 222 against the urging force of the plate spring 224. At this time, since the urging force of the plate spring 224 is set small and furthermore the roller 222 is moved only a little, the lock release of the roller 222 can be easily performed with small force.

And the motor 214 is positively rotated by controlling the control switch (not shown). By the positive rotation of the motor 214, the rotatable shaft 3 rotates in the clockwise direction along with the inner race 230 through the driving gear 212 and driven gear 211. At the same time, the arm 242 is operated in correspondence to the rotation of the inner race 230 and causes the release lever 240 to rotate in the same direction. When the inner race 230 is rotated in the clockwise direction, the roller 223 is moved relatively in the direction in which the bite of the roller 223 into the clearance 230 is released. Therefore, there is no possibility that the bite of the roller 223 into the clearance 233 (second clearance) will interfere with the clockwise rotation of the inner race 230.

If the mirror 4 has been moved to a desired position by the rotation of the rotatable shaft 3, then the positive rotation of the motor 214 is stopped. And if the arm 242 of the release lever 240 is stopped and the operator releases hold of the arm 242, the rollers 222 and 223 will be urged in the directions in which they bite into the clearance 233 (first and second clearances). This state is shown in Figs. 30 and 31. At this state, if the mirror 4 is moved in the right or left direction by external force, the roller 222 or 223 will bite into the clearance 232 and therefore the inner race 230 will be locked with great locking force. In other words, the mirror 4 is locked with great locking force.

Even in the case where the release lever 240 is rotated in the counterclockwise direction the bite of the roller 223 into the clearance (second clearance) 233 is released and therefore the counterclockwise rotation of the inner race 230 becomes possible. Thus, if the motor 214 is rotated reversely, the inner race 230 can be rotated in the counterclockwise direction in the same way as the above-mentioned.

Thus, since the release lever 240, along with the rollers 222 and 223, is moved a little against the urging force of the plate spring 224 by controlling the arm 242, the lock release of the inner race 230 can be easily performed with small force.

And if the lock of the inner race 230 is released, the inner race 230 and rotatable shaft 3 can be rotated with small driving force and therefore the mirror 4 can be rotated with small driving force.

In this embodiment, the inner race 230 is arranged so as to be freely rotatable within the outer race 221, and furthermore, only the rollers 222 and 223, plate spring 224, and the levers 243 and 244 of the release lever 240 are arranged in the clearance 233. Therefore, the structure is simple and can achieve a reduction in the size of the device. In addition, since an electromagnetic clutch, etc., are not used, a reduction in the weight of the device can be achieved and also there is no need to perform the troublesome wiring for the electromagnetic clutch.

### (Second Embodiment)

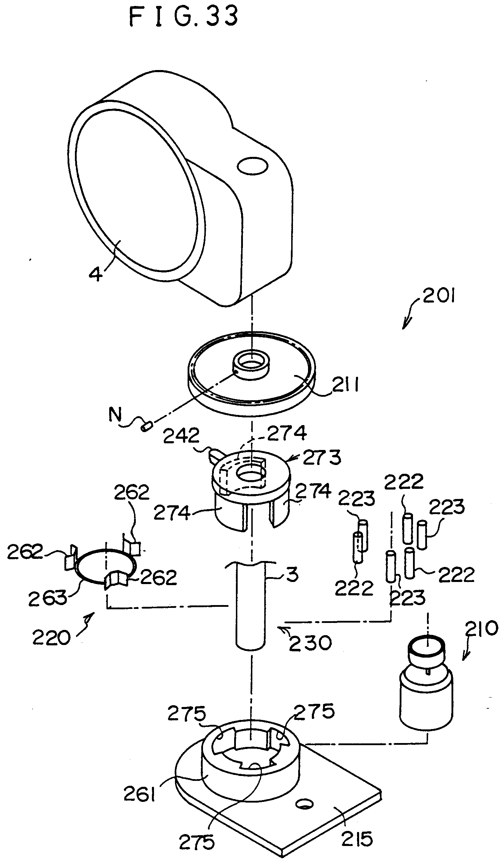

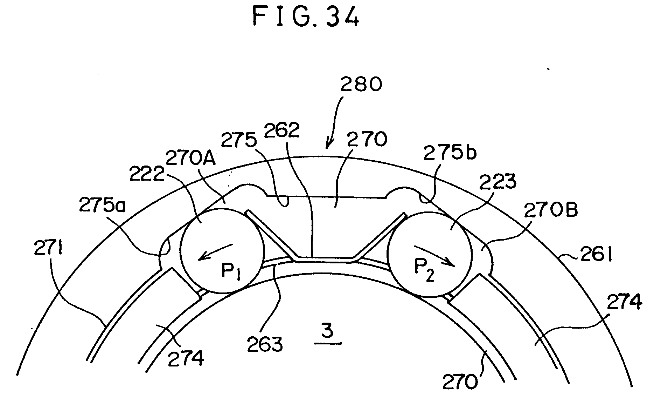

Figs. 33 and 34 illustrate a second embodiment of the present invention. In the second embodiment, the inner race 230 of the first embodiment is omitted. In the clearance 270 formed between a rotatable shaft 3 and an outer race 261, rollers 222 and 223 and a spring 262 are arranged. Also, in the clearance 271 formed between the rotatable shaft 3 and the outer race 261, the levers 274 of a release lever 273 are arranged. The locking mechanism of this second embodiment is constituted by the rotatable shaft 3, outer race 261, rollers 222 and 223, spring 262, release lever 273, and so on.

The clearance 270 is formed by a recess 275 provided in the inner circumferential surface of the outer race 261, and the rotatable shaft 3. This recess 275 is formed with inclined surfaces 275a and 275b where the widths of clearances 270A and 270B narrow as they go in directions of arrows P1 and P2. In the clearances 270A and 270B the rollers 222 and 223 are arranged. Between the rollers 222 and 223 the spring 262 is arranged. With the urging force of the spring 262, the rollers 222 and 223 are urged in the directions of arrows P1 and P2 and bite into the clearances 270A and 270B. In this manner, the rotatable shaft 3 is locked.

The spring 262 is formed integrally with a ring 263. This ring 263 is interposed between the outer race 261 and the rotatable shaft 3 and is freely rotatable against the rotatable shaft 3 and outer race 261.

The levers 274 of the release lever 273 are provided with three levers. As with the first embodiment, this lever 274 is rotated in the direction P1 or P2, whereby the bite of the roller 222 or 223 is released.

According to the second embodiment, the inner race 230 is omitted, so that the number of components can be further reduced, and furthermore, reductions in the size and weight can be further achieved.

### (Third Embodiment)

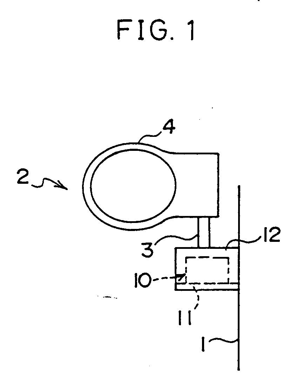

In Fig. 1, reference numeral 1 denotes a car body and 2 an electric housed type mirror attached to the car body 1.

The electric housed type mirror 2 is constituted by a mirror (driven member) 4 attached to a rotatable shaft 3, and a locking mechanism 10 for rotating the rotatable shaft 3 and the mirror 4. The locking mechanism 10 is provided on a base member 11 rigidly attached to the car body 1 and also is covered by a cover case 12.

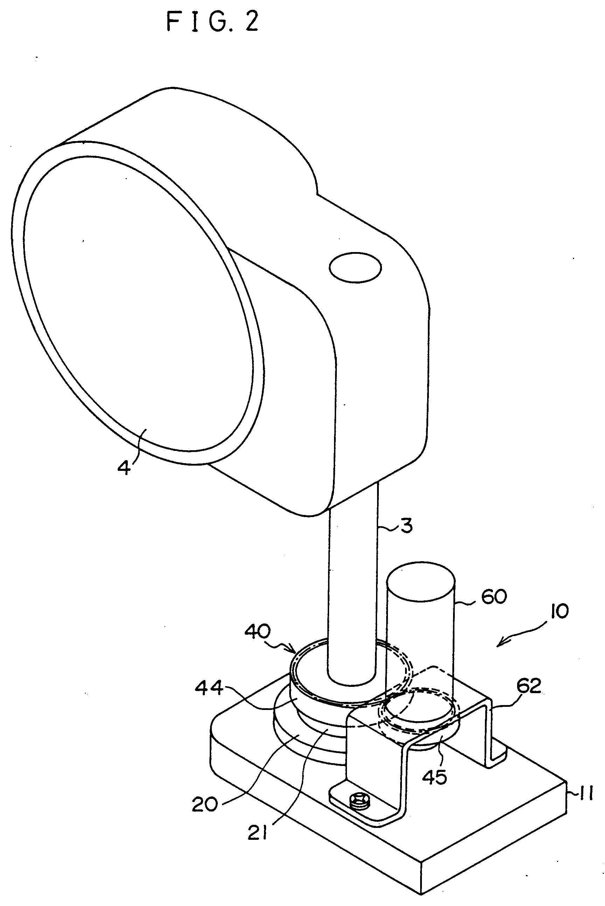

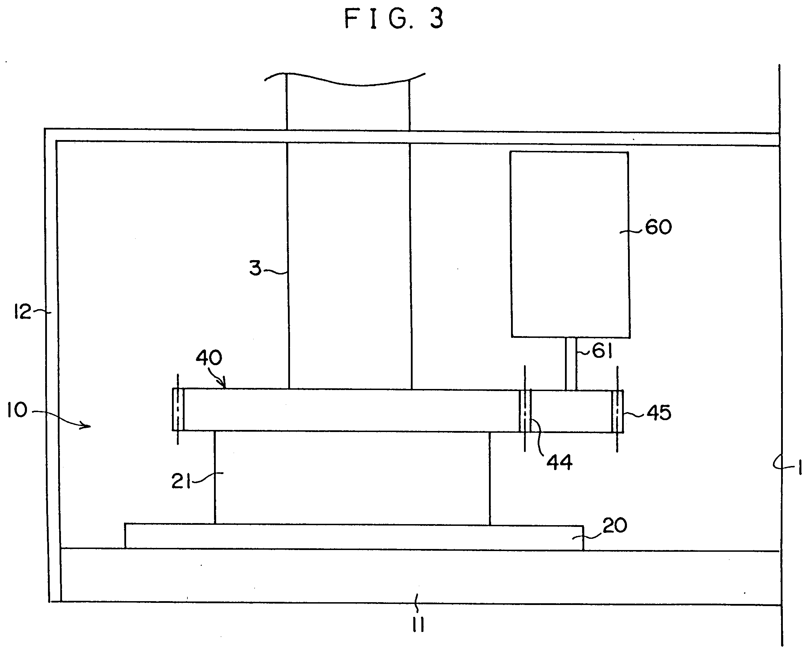

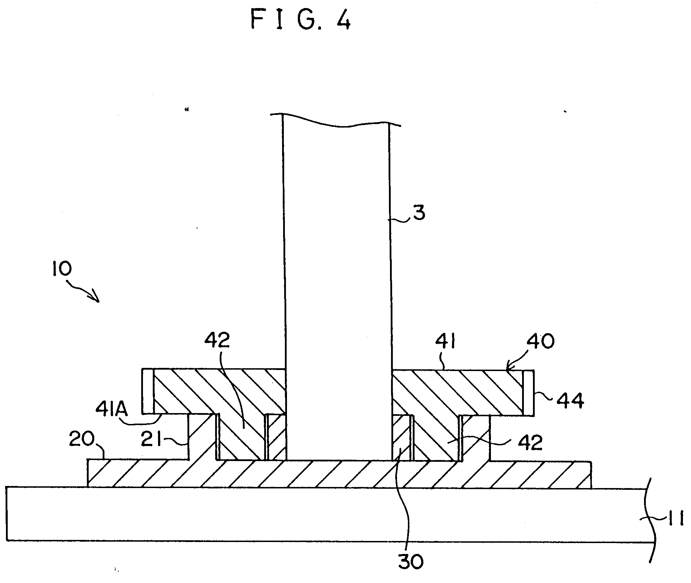

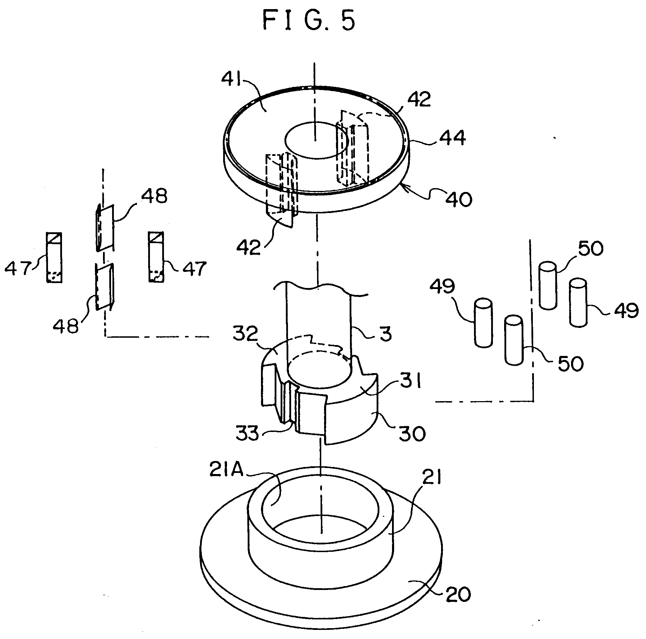

The locking mechanism 10, as shown in Figs. 2 through 5, is provided with a cylindrical outer race 21 formed integrally with a stationary plate 20 fixed to the base member 11 and also having an opened upper end, an inner race 30 arranged so as to be freely rotatable within the outer race 21, a release lever plate 40 rotatable against the outer race 21, rollers 49 and 50, a motor 60 for rotating the release lever plate 40, and so on.

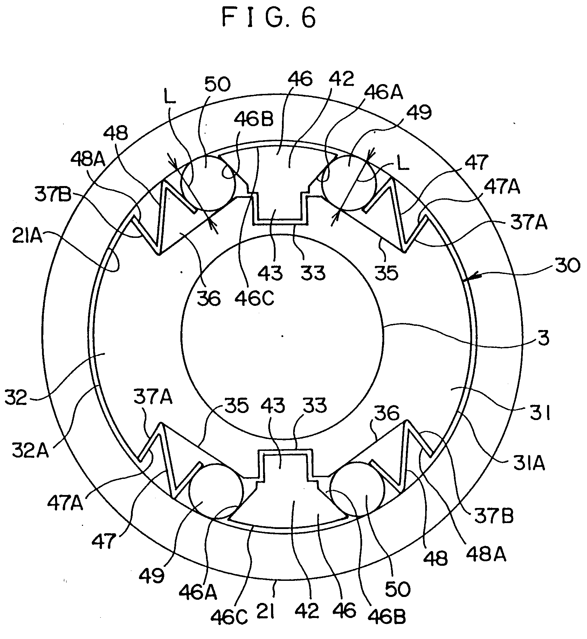

The inner race 30, as shown in Fig. 6, is attached to the rotatable shaft 3 and is formed with guide portions 31 and 32 at the positions across the rotatable shaft 3. The guide portions 31 and 32 are formed with arcuate guide surfaces 31A and 31B, which are opposed to the inner circumferential surface 21A of the outer race 21. By these guide surfaces 31A and 31B, the inner race 30 can rotate smoothly within the outer race 21.

The inner race 30 is also formed with recesses 33 and 33 in the direction perpendicular to a line linking the guide portions 31 and 32 together and also at the positions across the rotatable shaft 3. The inner race 30 is further formed with flat abutting surfaces 35 and 36 at the positions across the recess 33. The separation distance L between the abutting surface 35 (or 36) and the inner circumferential surface 21A of the outer race 21 is set so that it is increased until the intermediate position of the abutting surface 35 (or 36) as it goes away from the recess 33 along the circumferential direction. The clearance formed between the abutting surface 35 and the inner circumferential surface 21A is referred to as first clearance, and the clearance formed between the abutting surface 36 and the inner circumferential surface 21A is referred to as second clearance.

The abutting surface 35 is formed continuously with a stop surface 37A, and likewise the abutting surface 36 is formed continuously with a stop surface 37B. The abutting surface 35 and the stop surface 37A are at approximately right angles to each other. Similarly, the abutting surface 36 and the stop surface 37B are at approximately right angles to each other.

The release lever plate 40 is constituted by a circular plate 41 and a pair of levers (release members) 42. The circular plate 41 covers the upper opening of the outer race 21 and is formed with a center hole through which the rotatable shaft 3 is inserted so that it is rotatable. The pair of levers 42 project downward from the lower surface 41A of the circular plate 41 and also is formed integrally with the lower surface 41A. The outer circumferential surface of the circular plate 41 is formed with a driven gear 44, which meshes with a driving gear 45 to be described later. By rotation of the driving gear 45, the circular plate 41 performs a relative motion of rotation against the outer race 21. That is, the release lever plate 40 rotates on the center axis line of the outer race 21.

Each lever 42 has a lever portion 46 and a protruding portion 43. The lever portion 46 is arranged in the clearance between the inner circumferential surface 21A of the outer race 21 and the recess 33 of the inner race 30, and the protruding portion 43 is formed continuously on the lever portion 46 and fitted loosely in the recess 33. And the recess 33 and protruding portion 43 constitute engagement means, and with this engagement means, the lever 42 rotates the inner race 30.

Both sides of the lever portion 46 are taper surfaces 46A and 46B so that the circumferential wide thereof narrows gradually toward the rotatable shaft 3. The outer side of the lever portion 46 is a guide surface 46C formed into an arcuate shape so that the lever portion 46 can move along the inner circumferential surface 21A of the outer race 21.

Also, in the space formed between the outer race 21 and the abutting surfaces 35 and 36 of the inner race 30, plate springs (elastic members) 47 and 48 and cylindrical rollers 49 (bite means or first bite member) and 50 (bite means or second bite member) are arranged. The ends 47A and 47B of the plate springs 47 and 48 are attached to the stop surfaces 37A and 37B of the inner race 30, respectively. These springs 47 and 48 urge the rollers 49 and 50 toward the taper surfaces 46A and 46B of the lever portion 46, respectively. That is, the rollers 49 and 50 are urged so as to bite into the clearance between the inner circumferential surface 21A of the outer race 21 and the abutting surface 35 of the inner race 30 and the clearance between the inner circumferential surface 21A and the abutting surface 36, respectively.

And for example, if turning force is applied to the inner race 30 in the clockwise direction of Fig. 6, the roller 49 will further bite into the clearance between the inner circumferential surface 21A of the outer race 21 and the abutting surface 35 of the inner race 30 and therefore the inner race 30 cannot rotate. As a consequence, the locked state of the inner race 30 is held. The same may be said of the case where turning force is applied to the inner race 30 in the counterclockwise direction.

For example, if the release lever plate 40 is rotated in the clockwise direction, the lever 42 will move the roller 49 to the side of the stop surface 37A against the urging force of the plate spring 47. Therefore, the above-mentioned bite of the roller 49 is released and the rotation of the inner race 30 in the clockwise direction becomes possible. Also, by the clockwise rotation of this inner race 30, the bite of the roller 50 is released, so that there is no possibility that the bite of the roller 50 will interfere with the clockwise rotation of the inner race 30 in the clockwise direction.

The same may be said of the case where the release lever plate 40 is rotated in the counterclockwise direction.

The driving gear 45 is attached to the driving shaft 61 of a motor 60. The motor 60, as shown in Fig. 2, is attached to a bracket 62 attached to the base member 11.

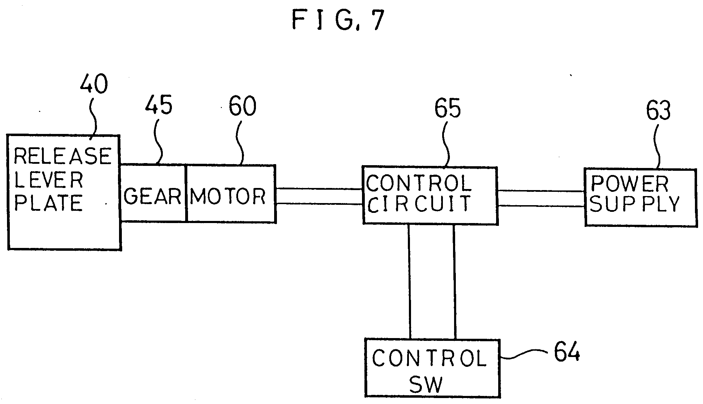

Fig. 7 shows the constitution of a system for controlling the motor 60. In the figure, reference numeral 63 denotes a power supply (battery) and 64 a control switch for rotating the motor 60 positively or reversely. This control switch 64 is provided, for example, on the instrument panel of a compartment (not shown). Reference numeral 65 is a control circuit, which rotates the motor 60 positively or reversely on the basis of the control of the control switch 64.

Now, the operation of the vehicular electric housed type mirror of the aforementioned embodiment will be described.

For instance, suppose that when the mirror 4 is locked at its housing position (in which the mirror 4 abuts on the car body 1), the inner race 30, levers 42 of the release lever plate 40, and rollers 49 and 50 are at the positions shown in Fig. 6.

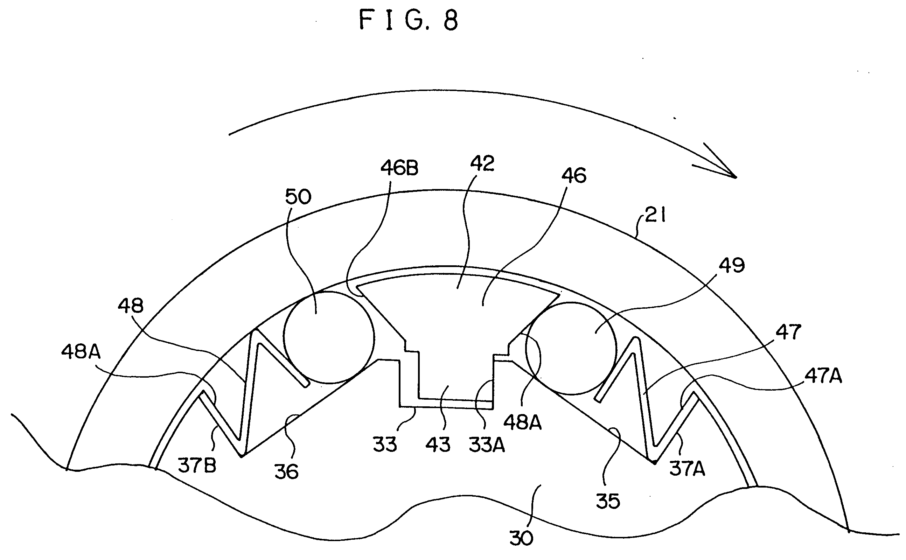

And in the case where the mirror 4 is moved from the housing position to the position shown in Figs. 1 and 2, the control switch 64 is controlled, whereby the motor 60 is positively rotated. If the motor 60 begins to rotate positively, the release lever plate 40 will begin to rotate in the clockwise direction (in Fig. 2) through the driving gear 45. By the rotation of the release lever plate 40 in the clockwise direction, as shown in Fig. 8, the lever portion 46 of the lever 42 of the release lever plate 40 moves the roller 49 to the side of the stop surface 37A of the inner race 30 against the urging force of the plate spring 47. This movement releases the bite of the roller 49.

And if the bite of the roller 49 is released, the protruding portion 43 of the lever 42 of the release lever plate 40 will abut on the side portion 33A of the recess 33 of the inner race 30 and cause the inner race 30 to rotate in the direction of arrow (clockwise direction) shown in Fig. 8. Along with the rotation of this inner race 30, the rotatable shaft 3 rotates in clockwise direction, and the mirror 4 is moved from the housing position to the position shown in Figs. 1 and 2.

If the mirror 4 is moved to the position shown in Figs. 1 and 2, the control of the control switch 64 will be stopped. With this, the motor 60 is stopped and then the rotation of the release lever plate 40 is stopped, whereby the mirror 4 is stopped at the position shown in Figs. 1 and 2.

If the motor 60 is stopped; the inner race 30 and the lever 42 of the release lever plate 40 will be located at the positions shown in Fig. 6 by the urging force of the plate spring 47.

At this state, if external force is exerted on the mirror 4 and causes the rotatable shaft 3 to rotate in the clockwise or counterclockwise direction, the inner race 30 will rotate in the clockwise or counterclockwise direction along with the rotatable shaft 3. By the rotation of this inner race 30 in the clockwise or counterclockwise direction, the roller 50 or 49 bites into the clearance between the inner circumferential surface 21A of the outer race 21 and the abutting surface 36 or 35 of the inner race, so the inner race 30 cannot rotate. As a consequence, the inner race 30 remains locked.

That is, since force for locking the inner race 30 is produced by the roller 50 or 49, left or right rotation of the mirror 4 will be prevented even if external force is exerted on the mirror 4. Even when the mirror 4 is stopped at any other arbitrary position, it is locked at the arbitrary position in the same way as the above-mentioned.

Where the mirror 4 is housed the control switch 64 is controlled, whereby the motor 60 is reversely rotated. By the reverse rotation of this motor 60, the release lever plate 40 is rotated in the counterclockwise direction. In the above-mentioned way, the bite of the roller 50 is released, then the inner race 30 and rotatable shaft 3 rotate in the counterclockwise direction, and the mirror 4 is moved to the housing position.

If the release lever plate 40 is thus rotated by the motor 60, the bite of the roller 49 or 50 will be released and therefore the inner race 30 and rotatable shaft 3 can be rotated with small driving force. In other words, the mirror 4 can be rotated with small driving force. Also, in the case where the mirror 4 is rotated by external force, the roller 49 or 50 bites into the clearance between the inner circumferential surface 21A of the outer race 21 and the abutting surface 35 or 36 of the inner race 30, so the inner race 30 is further locked with beat locking force. In other words, the mirror 4 can be locked with great locking force.

In this embodiment, the inner race 30 is arranged so as to be freely rotatable within the outer race 21, and furthermore, only the rollers 49 and 50, plate springs 47 and 48, and the lever 42 of the release lever plate 40 are arranged between the outer race 21 and inner race 30. Therefore, the structure is simple and can achieve a reduction in the size of the device. In addition, since an electromagnetic clutch, etc., are not used, a reduction in the weight of the device can be achieved and also there is no need to perform the troublesome wiring for the electromagnetic clutch.

### (Fourth Embodiment)

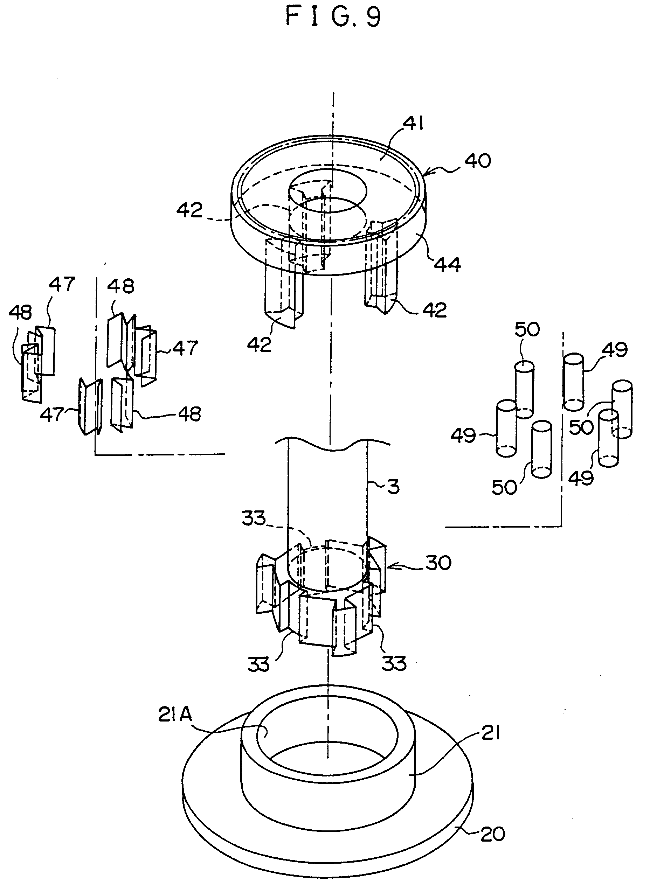

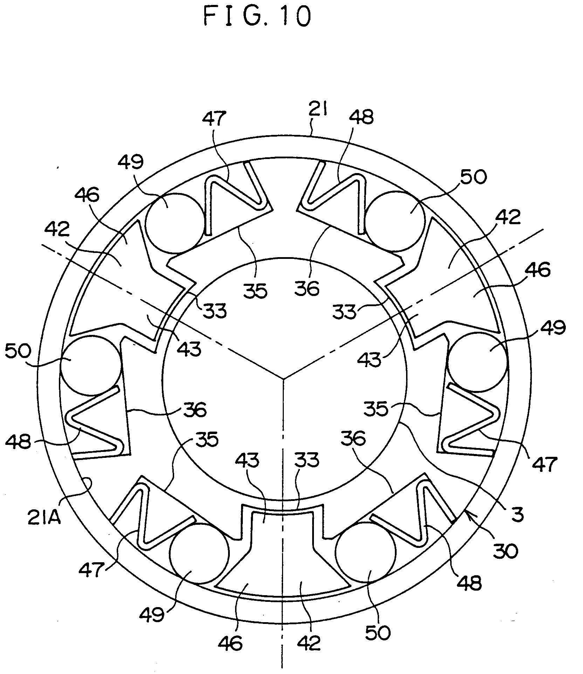

Figs. 9 and 10 illustrate a fourth embodiment of the present invention. In the fourth embodiment, three recesses 33 are formed at regular intervals in an inner race 30 arranged so as to be freely rotatable within an outer race 21. In the clearances between each recess 33 and the inner circumferential surface 21A of the outer race 21, three levers 42 of a release lever plate 40 are inserted, respectively. And a pair of plate springs 47 and 48 and a pair of rollers 49 and 50 are arranged at positions across the corresponding lever 42.

According to the fourth embodiment, rotation of the inner race 30 is prevented by three rollers 49 or three rollers 50, and the positions at which the three rollers 49 or three rollers 50 bite are not located on the same straight line which passes through the center of a rotatable shaft 3. Therefore, even if external force is exerted on the inner race 30, the load for locking the inner race 30 will be evenly distributed without being biased. For this reason, there is no possibility that the inner race 30 will be clamped on the same straight line by the load. In other words, the inner race 30 is prevented from being attached rigidly within the outer race 21.

In this embodiment, although three pairs of rollers 49 and 50 are arranged at three positions, the same effect will be obtainable even if they are arranged at odd positions such as 5 positions or 7 positions.

### (Fifth Embodiment)

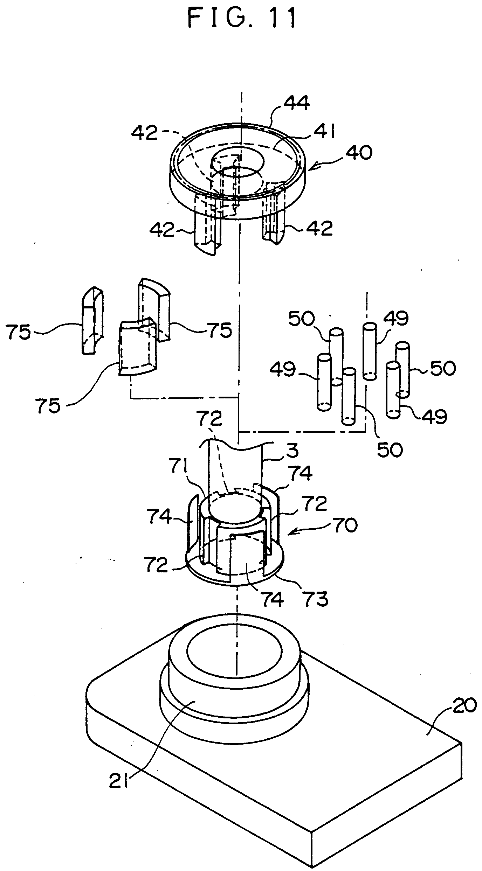

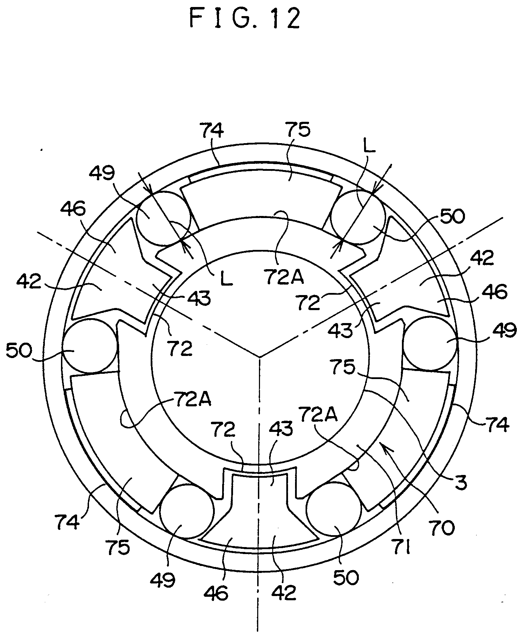

Figs. 11 and 12 illustrate a fifth embodiment of the present invention. In the figures, 70 is an inner race, which is arranged so as to be freely rotatable within an outer race 21. This inner race 70 has a cylindrical portion 71, and on the outer circumferential surface of this cylindrical portion 71, three recesses 72 are formed at regular intervals. In the recess 72 the protruding portion 43 of a lever 42 is loosely inserted, and the recess 72 and the protruding portion 43 constitute engagement means.

The lower portion of the cylindrical portion 71 is formed integrally with a circular plate 73, which is greater in radius than the radius of the cylindrical portion 71. On the circumferential ends of the circular plate 73 three arcuate guide portions 74 are formed. Each guide portion 74 is located between two adjacent recesses 72 and protrude upward from the circular plate 73. With this guide portion 74, the inner race 70 can be rotated smoothly within the outer race 21.

And between the guide portion 74 and the cylindrical portion 71, silicon rubber 75 is attached. This silicon rubber 75 urges the rollers 49 and 50 toward the levers 42 of the release lever plate 40. The distance L between the outer circumferential surface 71A of the cylindrical portion 71 and the inner circumferential surface 21A of the outer race 21, as with the third embodiment, is set so that it is gradually reduced toward the recess 72.

According to the fifth embodiment, in addition to the same effect as the fourth embodiment, the number of components can be reduced because the rollers 49 and 50 are urged in the bite directions by the single silicon rubber 75. In addition, there is no need to form the stop surfaces 37A and 37B (see Fig. 6) for stopping the plate springs 47 and 48, so a simplification in the shape of the inner race 70 can be achieved.

Furthermore, the urging force which is applied to the rollers 49 and 50 can be set by the hardness or volume of the silicon rubber 75, so stable thrust load to the rollers 49 and 50 can be obtained even with a small stroke. Moreover, since the silicon rubber 75 can be manufactured by a forming operation, it can be formed in correspondence to the shape of attachment space. For this reason, the attaching operation can be simplified.

### (Sixth Embodiment)

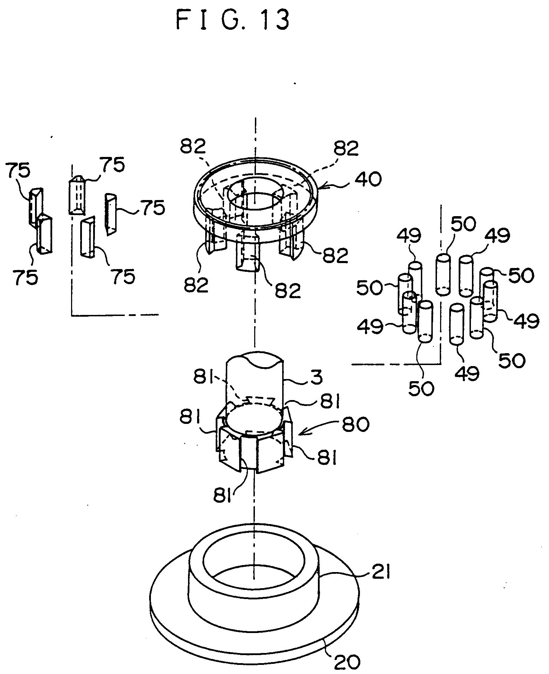

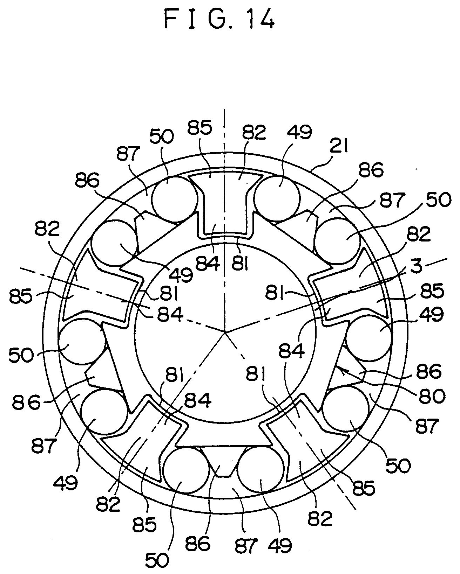

Figs. 13 and 14 illustrate a sixth embodiment of the present invention. In the figures, 80 is an inner race, which is arranged so as to be freely rotatable within an outer race 21. On the outer circumferential surface of this inner race 80 five recesses 81 are formed at regular intervals. 82 is five levers formed on the circular plate 41 of a release lever plate 40. The lever 82 has a protruding portion 84 and a lever portion 85, and the protruding portion 84 is loosely fitted in the recess 81 of the inner race 80. And the recess 81 and the protruding portion 84 constitute engagement means.

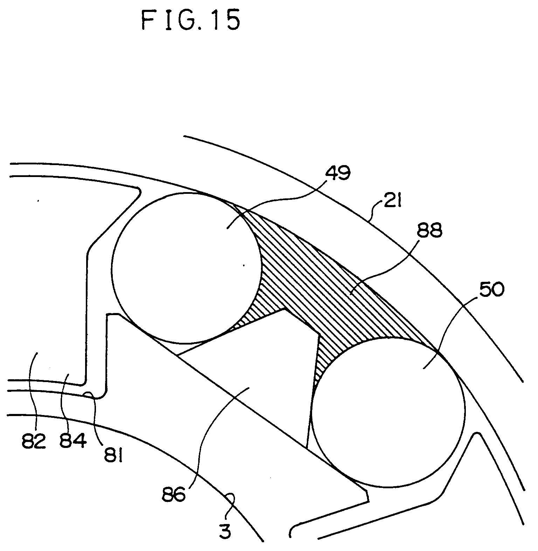

Also, trapezoidal silicon rubber 86 is attached to the outer circumferential surface of the inner race 80 between two adjacent recesses 81 and 81. This silicon rubber 86 urges rollers 49 and 50 toward the levers 82 of the release lever plate 40. Also, between the silicon rubber 86 and the inner circumferential surface 21A of an outer race 21, space 87 with a predetermined size is formed. As shown in Fig. 15, this space 87 is filled with grease 88. This grease 88 reduces friction when the inner race 80 is rotated.

According to the sixth embodiment, in addition to the same effect as the fourth embodiment, the structure of the inner race 80 can be made very simple.

### (Seventh Embodiment)

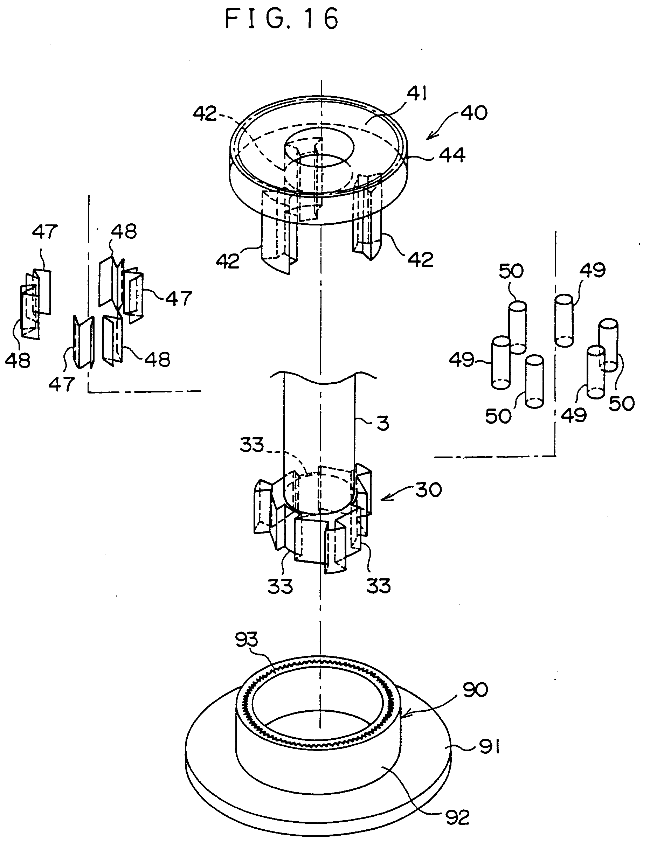

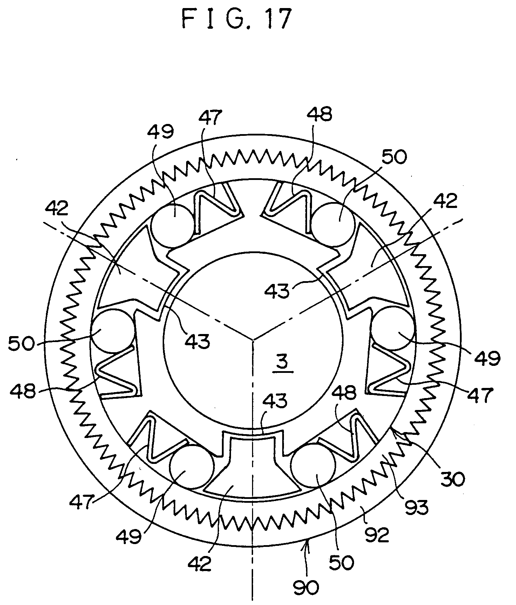

Figs. 16 and 17 illustrate a seventh embodiment of the present invention. In the seventh embodiment, in addition to the same effect as the fourth embodiment, an outer race 90 is made dual structure, whereby a reduction in the weight of the outer race 90 is achieved and also a predetermined force for locking an inner race 30 is obtained.

The outer race 90 is constituted by a cylindrical portion (a second ring member) 92 formed on a stationary plate 91, and a metal cylindrical member (a first ring member) 93 attached within the cylindrical portion 92. The stationary plate 91 and the cylindrical portion 92 are integrally formed with resin. On the outer circumference of the cylindrical member 93 a knurling process is performed, and the cylindrical member 93 is attached to the cylindrical portion 92 by an insert forming operation. And since the cylindrical member 93 is given a knurling process, the rotation within the cylindrical portion 92 is prevented.

### (Eighth Embodiment)

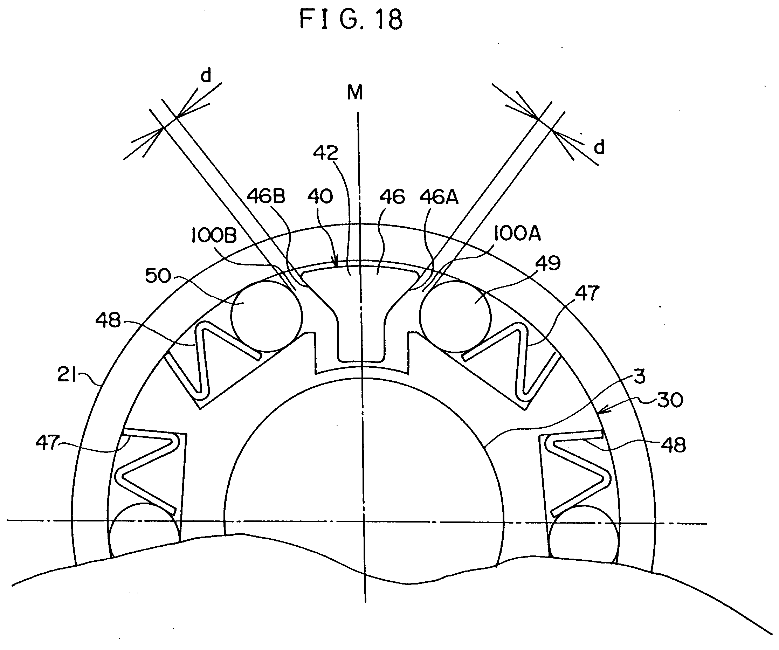

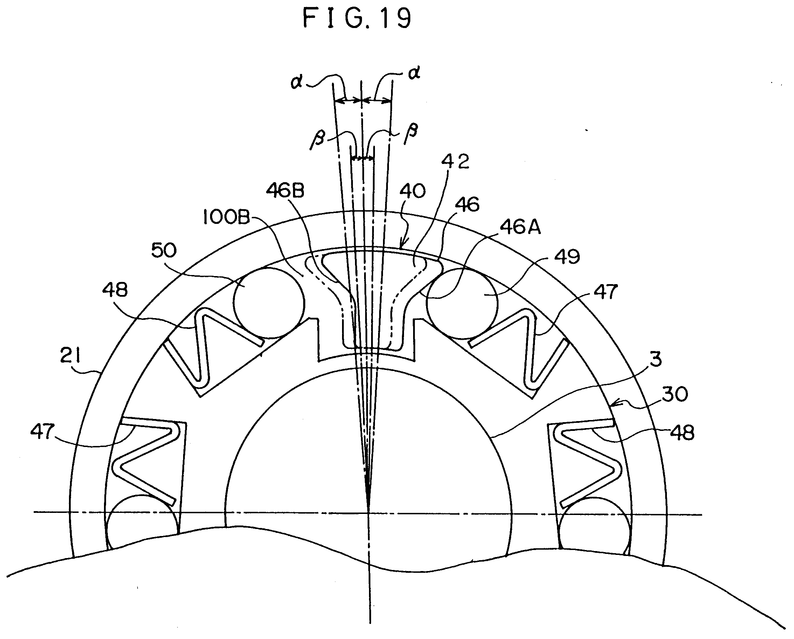

Figs. 18 and 19 illustrate an eighth embodiment of the present invention. In the eighth embodiment, clearances 100A and 100B with a predetermined width d are provided between the taper surface 46A of a lever portion 46 and a roller 49 and between the taper surface 46B of the lever portion 46 and a roller 50, respectively. Assuming α is the angle of rotation from the bit state of the roller 49 shown in Fig. 18 to the bite released state of the roller 49 shown by a solid line in Fig. 19 and that β is the angle of rotation corresponding to the rotation amount of movement of the lever portion 46 due to the backlash between a driven gear 44 and a driving gear 45, the predetermined width d is set so that α is greater than β.

According to the eighth embodiment, the clearance 100A is provided so that α is greater than β. Therefore, for example even if the lever portion 46 is rotated in the clockwise direction by an angle of rotation β because of backlash by the influence of vibration, there will be no possibility that the taper surface 46A of the lever portion 46 and the roller 49 will contact each other. With this, there is no possibility that the bite of the roller 49 will be released by backlash, and the locked state of the inner race 30 is reliably held. The same may be said of the case where the lever portion 46 is rotated in the counterclockwise direction.

If the inner race 30 is rotated by driving the motor 60 and then the motor 60 is stopped, the inner race 30 which moves integrally with the mirror 4 will be rotated a few angles by the inertia of the mirror 4 and then stopped. Therefore, in the locked state of the inner race 30, the lever portion 46 is located near a straight line M present at equal distances from the rollers 49 and 50.

Although all the above-mentioned embodiments have been described with respect to the locking mechanism for moving the mirror 4, the present invention is not limited to this. For example, it is a matter of course that the present invention is applicable to a lamp attached to a car body so that it can perform optical axis adjustment.

### (Ninth Embodiment)

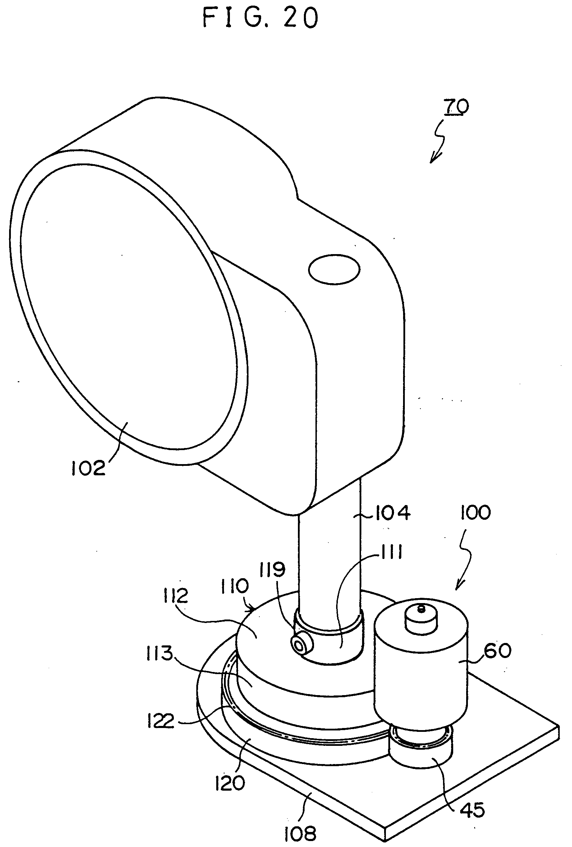

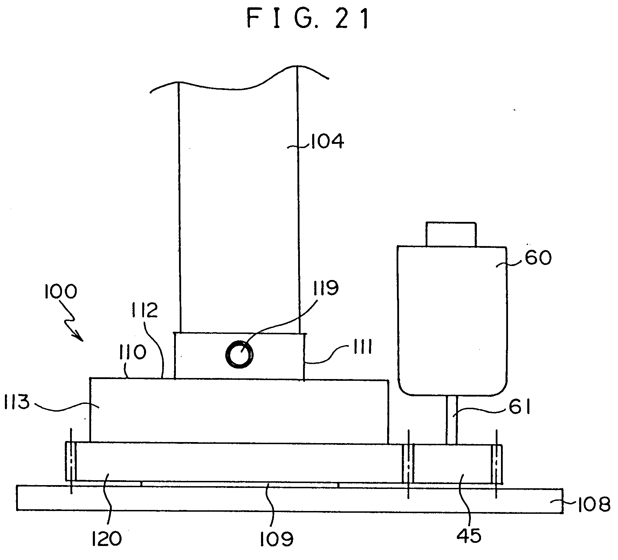

Figs. 20 through 22 illustrate an electric housed type mirror 70 of a ninth embodiment of the present invention. This electric housed type mirror 70 is equipped with a mirror (a driven member) 102 attached to a rotatable shaft 104, and a locking mechanism 100 for rotating the mirror 102.

This rocking mechanism 100 is equipped with a stationary shaft 109 provided on a base member (a stationary base) 108, a disc gear member 120, a cylindrical outer race 110, rollers 125 and 126, a drive motor 60, and so on.

The central portion of the gear member 120 is formed with a hole 121 through which the stationary shaft 109 of the base member 108 is inserted. The point end portion 109A of the stationary shaft (inner race) 109 (which is approximately 1/2 of the height of the stationary shaft 109) protrudes from the side surface 120A of the gear member 120. The gear member 120 is freely rotatably against the stationary shaft 109, and the circumference of the gear member 120 is formed with a driven gear 122. This driven gear 122 meshes with a driving gear 45, which is attached to the driving shaft 61 of a motor 60. The motor 60 is fixed to a housing (not shown) which covers the outer race 110, motor 60, etc.

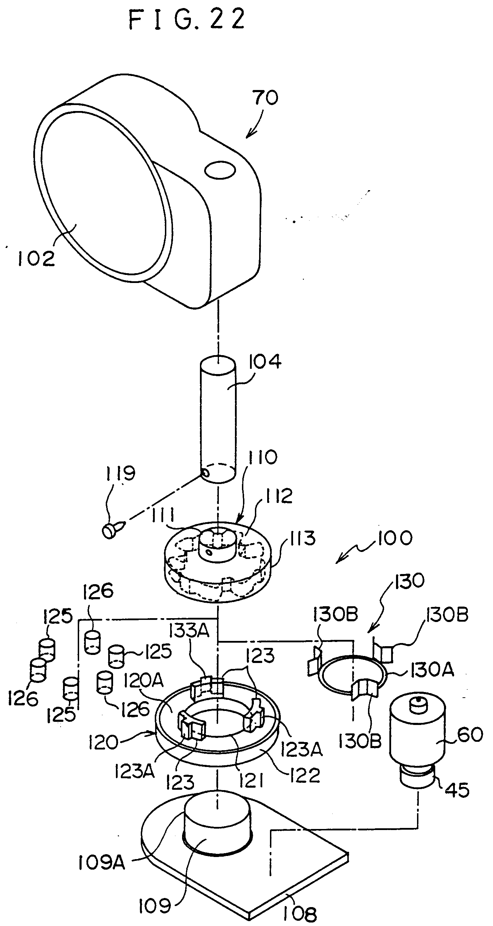

Also, on one side surface 120A (an upper surface in Fig. 22) of the gear member 120, three arcuate release members 123 are provided at regular intervals along the circumference of the hole 121. On the outer surface of each release member 123 an outwardly protruding protrusion 123A is formed.

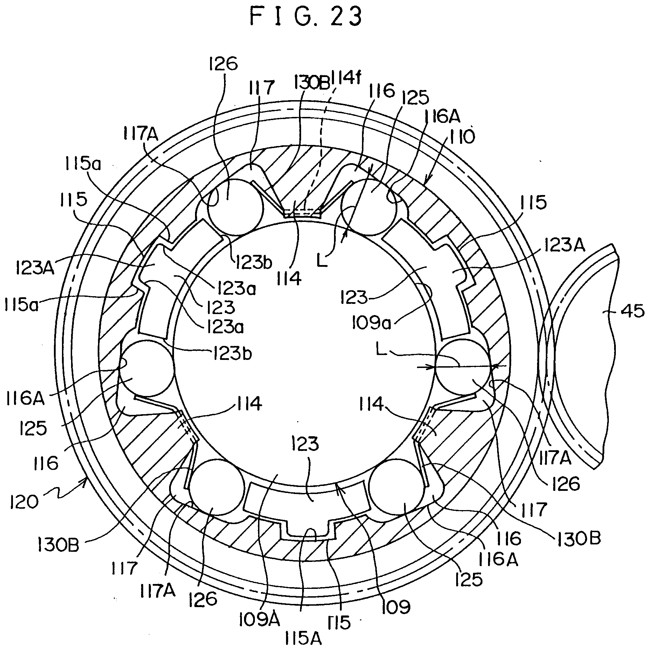

The outer race 110 is attached to the point end portion 109A of the stationary shaft 109 of the base member 108 so that it is freely rotatable. And the release member 123 is rotated on the center axis line of the outer race 110 by rotation of the gear member 120. This outer race 110 has a ceiling wall 112 forming a cylindrical portion 111, and a circumferential wall 113 formed on the circumference of the ceiling wall 112 and surrounding the release members 123. The cylindrical portion 111 is fixed to the rotatable shaft 104 of the mirror 102 by means of a vis 119. On the inner circumferential surface of the circumferential wall 113, as shown in Fig. 23, three inwardly protruding portions 114 are formed at regular intervals along the circumferential direction.

Also, on the inner circumferential surface of the circumferential wall 113 an engagement recess 115 is formed at the intermediate position between two adjacent protruding portions 114 and 114, and the protrusion 123A of the release member 123 is engageable with the engagement recess 115. At the positions across the engagement recess 115. recesses 116 and 117 are formed. The recesses 116 and 117 are formed with flat abutting surfaces 116A and 117A, respectively. And the engagement recess 115 and the protrusion 123A constitute engagement means.

The separation distance L between the abutting surface 116A and the outer circumferential surface 109a of the point end portion 109A of the stationary shaft 109 is increased as it goes away from the engagement recess 115 along the circumferential direction. Likewise, the separation distance L between the abutting surface 117A and the outer circumferential surface 109a is increased as it goes away from the engagement recess 115. The clearance between the abutting surface 116A and the outer circumferential surface 109a of the stationary shaft 109 is referred to as second clearance. The clearance between the abutting surface 117A and the outer circumferential surface 109a of the stationary shaft 109 is referred to as first clearance. Within the recesses 116 and 117, rollers 125 (bite means or second bite member) and 126 (bite means or first bite member) are formed so that they are rollable.

In Fig. 22 reference numeral 130 denotes a plate spring member. The plate spring member 130 is constituted by a ring portion 130A and three plate spring portions 130B formed on the ring portion 130A. The plate spring portions 130B are inserted into and attached to grooves 114f provided in the protruding portions 114 of the outer race 110. The ring portion 130A of the plate spring member 130 is inserted onto the stationary shaft 109 and is rotatable against the stationary shaft 109 along with the outer race 110.

The plate portion 130B urges the rollers 125 and 126 in the directions in which the rollers bite into the second and first clearances between the abutting surface 116A and the outer circumferential surface 109a of the stationary shaft 109 and between the abutting surface 117A and the outer circumferential surface 109a, respectively. As a result, the outer race 110 is locked against the stationary shaft 109.

Also, between the inner circumferential surface of the circumferential wall 113 of the outer race 110 and the outer circumferential surface 109a of the point end portion 109A of the stationary shaft 109 and also between two adjacent rollers 125 and 126, the release member 123 of the gear member 120 is arranged. The protrusion 123A of this release member 123 is inserted in the engagement recess 115 of the outer race 110. And the stationary shaft 109, outer race 110, rollers 125 and 126, release member 123, etc., constitute the locking mechanism.

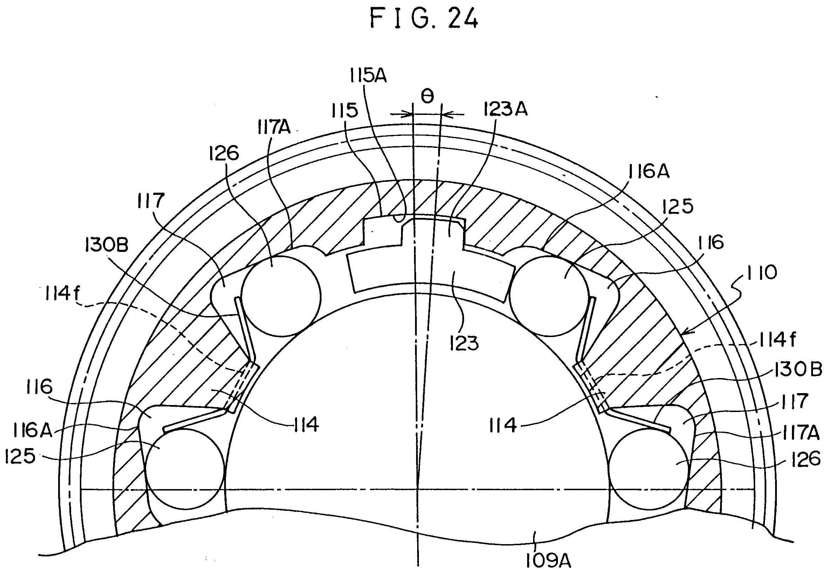

Between both side surfaces 123 of the protrusion 123 and the side surface 115a of the engagement recess 115, a predetermined clearance is formed. As shown in Fig. 24, the release member 123, along with the gear member 120, is rotatable by an angle of θ against the outer race 110.

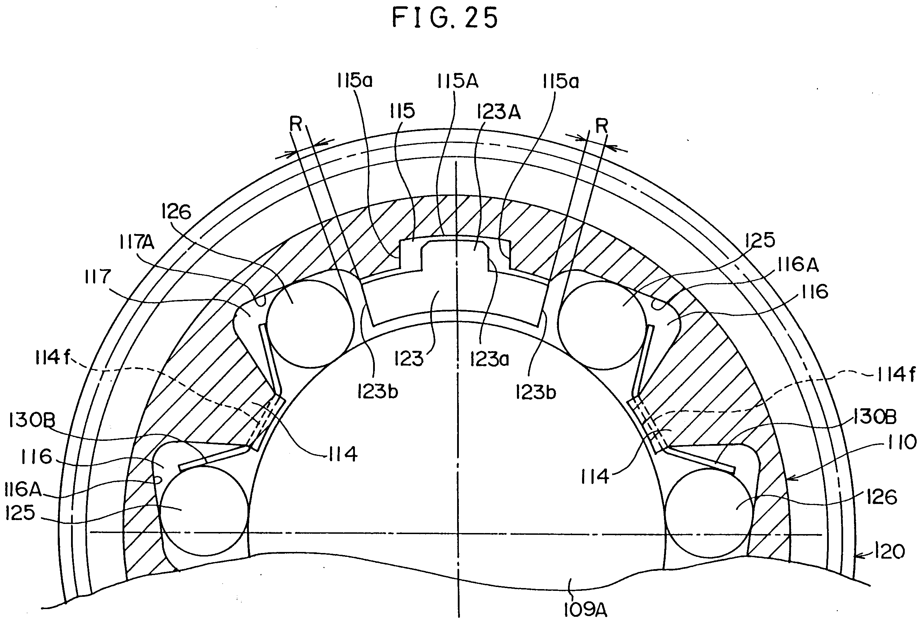

On the other hand, between one side surface 123b of the release member 123 and the roller 125 and between the other side surface 123b and the roller 126, predetermined clearances R (see Fig. 25) are formed. If the gear member 120 is rotated through a smaller angle α than an angle θ against the outer race 110, the side surface 123b of the release member 123 will abut on the roller 125 or 126. And if the gear member 120 is rotated through the angle θ against the outer race 110, the release member 123 will move the roller 125 or 126 toward the protruding portion 114 against the urging force of the plate spring portion 130B and therefore the bite of the roller 125 or 126 will be released. As a result, the outer race 110 can rotate along with the gear member 120.

The above-mentioned angle α is set so that it is greater than the angle of rotation of the gear member 120 due to the backlash between the driving gear 45 and the driven gear 122, so that the bite of the roller 125 or 126 is not released by the rotation of the gear member 120 due to the backlash.

Now, the vehicular electric housed type mirror 70 of the ninth embodiment will be described.

Assume that the motor 60 is driven and then the gear member 120 is rotated in the clockwise direction of Fig. 24 through the driving gear 45 of the motor 60. If the gear member 120 is rotated through an angle α against the outer race 110, the side surface 123b of the release member 123 will abut on the roller 126. If the gear member 120 is further rotated, the release member 123 will move the roller 125 toward the protruding portion 114 against the urging force of the plate spring portion 130B. As a result, the bite of the roller 125 is released. And if the gear member 120 is rotated through an angle θ against the outer race 110, the projection 123A of the release member 123 will abut on the side surface 115a of the engagement recess 115 of the outer race 110.

Furthermore, if the gear member 120 is rotated, the outer race 110 will be rotated in the clockwise direction along with the gear member 120 by the protrusion 123A of the release member 123. When the outer race 110 rotates in the clockwise direction, the bite of the roller 126 is released and therefore it will not interfere with the rotation of the outer race 110.

Along with the rotation of the outer race 110 the rotatable shaft 104 rotates, and along with the rotation of the rotatable shaft 104 the mirror 102 rotates on the rotatable shaft 104.

If the mirror 102 is moved to a desired position, the motor 60 will be stopped. If the motor 60 is stopped, the urging force of the plate spring portion 130B will cause the rollers 125 and 126 to bite into the first clearance between the abutting surface 116A and the outer circumferential surface 109a of the stationary shaft 109 and second clearance between the abutting surface 117A and the outer circumferential surface 109a, as shown in Fig. 25. Thus, the outer race 110 is locked.

Since the same may be said of the case where the gear member 120 is rotated in the counterclockwise direction, a description thereof is omitted.

Although the present invention has been fully described with relation to the preferred embodiments thereof, the invention is not to be limited to the details given herein, but may be modified within the scope of the appended claims.

## Claims

1. A locking mechanism configured to lock an inner race (30) provided within a cylindrical outer race (21) so that said inner race (30) is rotatable,
characterized in that: said locking mechanism comprises:
a release member (42) arranged in clearance between said outer race (21) and said inner race (30) and also rotatable on a center axis line of said outer race (21); and
bite means (49,50) arranged in said clearance and also bit in said clearance;
wherein said release member (42) releases the bite of said bite means (49,50) into said clearance and enables said inner race (30) to rotate relatively against said outer race (21), when rotated relatively against said outer race (21); and
wherein said bite means (49,50) bites into said clearance, then prevents the relative rotation of the inner race (30), and locks said inner race (30) with great locking force, when only said inner race (30) is rotated relatively against said outer race (21).

2. The locking mechanism as set forth in claim 1, characterized in that:
said clearance has first clearance which widens as it goes in a clockwise direction and second clearance which widens as it goes in a counterclockwise direction;
said bite means (49,50) is constituted by a first bite member (49) which bites into said first clearance when said inner race (30) rotates in said clockwise direction and a second bite member (50) which bites into said second clearance when said inner race (30) rotates in said counterclockwise direction;
said release member (42) releases the bite of said first bite member (49) into said first clearance and enables said inner race (30) to rotate in said clockwise direction, when rotated in said clockwise direction; and
said release member (42) releases the bite of said second bite member (50) into said second clearance and enables said inner race (30) to rotate in said counterclockwise direction, when rotated in said counterclockwise direction.

3. The locking mechanism as set forth in claim 2, characterized in that said first and second bite members (49,50) are constituted by rollers.

4. The locking mechanism as set forth in claim 2, wherein:
said release member (42) is provided with 3 or more odd number of release members at regular intervals around a center axis of said inner race (30); and
said first and second clearances are arranged at positions across each release member (42), and said first and second bite members (49,50) are arranged at positions across each release member (42).

5. The locking mechanism as set forth in any one of claims 2 through 4, wherein an elastic member (47,48) is provided for urging said first and second bite members (49,50) in directions in which they bite into said first and second clearances.

6. The locking mechanism as set forth in claim 1, further comprising:
a motor (60) for rotating said release member (42) relatively; and
engagement means (33,43) which engages with said inner race (30) or outer race (21) and thereby rotates said inner race (30) or outer race (21) along with said release member (42), when said release member (42) is rotated relatively.

7. The locking mechanism as set forth in claim 6, wherein:
said clearance has first clearance which widens as it goes in a clockwise direction and second clearance which widens as it goes in a counterclockwise direction;
said bite means is constituted by a first bite member (49) which bites into said first clearance when said inner race (30) rotates in said clockwise direction and a second bite member (50) which bites into said second clearance when said inner race (30) rotates in said counterclockwise direction;
said release member (42) releases the bite of said first bite member (49) into said first clearance and enables said inner race (30) to rotate in said clockwise direction, when rotated in said clockwise direction by said motor (60); and
said release member (42) releases the bite of said second bite member (50) into said second clearance and enables said inner race (30) to rotate in said counterclockwise direction, when rotated in said counterclockwise direction by said motor (60).

8. The locking mechanism as set forth in claim 7, wherein said first and second bite members (49,50) are rollers.

9. The locking mechanism as set forth in claim 7, wherein:
said release member (42) is provided with 3 or more odd number of release members at regular intervals around a center axis of said inner race; and
said first and second clearances are arranged at positions across each release member (42), and said first and second bite members (49,50) are arranged at positions across each release member (42).

10. The locking mechanism as set forth in any one of claims 7 through 9, wherein an elastic member (47,48) is provided for urging said first and second bite members (49,50) in directions in which they bite into said first and second clearances.

11. The locking mechanism as set forth in claim 9, wherein:
an elastic member (86), which urges said first and second bite members (49,50) in directions in which they bite into said first and second clearances, is provided between said first bite member (49) for one release member (42) and said second bite member (50) for the other release member (42); and
a portion, in which said elastic member is provided, is provided with space (87) which is filled with a lubricant (88).

12. The locking mechanism as set forth in any one of claims 6 through 9, wherein:
said outer race (90) is constituted by a first inner ring member (93) and a second outer ring member (92);
said first ring member (93) is formed with metal; and
said second ring member (92) is formed with synthetic resin.

13. The locking mechanism as set forth in claim 10, wherein:
said outer race (90) is constituted by a first inner ring member (93) and a second outer ring member (92);
said first ring member (93) is formed with metal; and
said second ring member (92) is formed with synthetic resin.

14. The locking mechanism as set forth in claim 6, or claim 7, or claim 8, or claim 9, or claim 11, wherein between said release member (42) and said bite means (49,50), there is provided clearance (100A, 100 B) greater than a rotation amount of movement of said release member (42) due to backlash.

15. The locking mechanism as set forth in claim 10, wherein between said release member (42) and said bite means (49,50), there is provided clearance (100A, 100B) greater than a rotation amount of movement of said release member (42) due to backlash.

16. The locking mechanism as set forth in claim 12, wherein between said release member (42) and said bite means (49,50), there is provided clearance (100A, 100B) greater than a rotation amount of movement of said release member (42) due to backlash.

17. A locking mechanism configured to lock a cylindrical outer race (110), comprising:
a stationary shaft (109) protruded from a stationary base (108);
a gear member (120) attached to said stationary shaft (109) so that it is freely rotatable, a point end portion of said stationary shaft (109) being protruded from one side surface of said gear member (120), said outer race (110) being inserted on the point end portion of said stationary shaft (109) so that it is freely rotatable;
characterized in that:
said locking mechanism further comprises:
a release member (123) provided on said one side surface of said gear member (120);
said outer race (110) having a circumferential wall (113) which surrounds said release member (123);
a motor (60) for rotating said gear member (120); and
bite means (125,126) arranged in clearance formed between said circumferential wall (113) and an outer circumferential surface of said point end portion of said stationary shaft (109);
wherein said bite means (125,126) bites into said clearance and locks said outer race (110), when said outer race (110) is rotated relatively against said gear member (120); and
when said gear member (120) is rotated by said motor (60), said release means (123) releases the bite of said bite means (125,126) into said clearance and also rotates said outer race (110), whereby said outer race (110) is moved with small driving force and said outer race (110) is locked at a stopped position with great locking force when said motor (60) is stopped.

18. The locking mechanism as set forth in claim 17, wherein:
said clearance has first clearance which widens as it goes in a clockwise direction and second clearance which widens as it goes in a counterclockwise direction;
said bite means is constituted by a first bite member (126) which bites into said first clearance when said outer race (110) rotates in said clockwise direction and a second bite member (125) which bites into said second clearance when said outer race (110) rotates in said counterclockwise direction;
said release member (123) releases the bite of said first bite member (126) into said first clearance and rotates said outer race (110) in said clockwise direction, when said gear member (120) is rotated in said clockwise direction by said motor (60); and
said release member (123) releases the bite of said second bite member (125) into said second clearance and rotates said outer race (110) in said counterclockwise direction, when said gear member (120) is rotated in said counterclockwise direction by said motor (60).

19. The locking mechanism as set forth in claim 18, wherein said first and second bite members (126,125) are constituted by rollers.

20. The locking mechanism as set forth in claim 18, wherein:
said release member (123) is provided with 3 or more odd number of release members at regular intervals around a center axis of said gear member (120); and
said first and second clearances are arranged at positions across each release member (123), and said first and second bite members (126,125) are arranged at positions across each release member (123).

21. The locking mechanism as set forth in any one of claims 18 through 20, wherein an elastic member (130B) is provided for urging said first and second bite members (126,125) in directions in which they bite into said first and second clearances.

22. The locking mechanism as set forth in any one of claims 17 through 20, wherein between said release member (123) and said bite means, there is provided clearance (R) greater than a rotation amount of movement of said gear member (120) due to backlash.
